# EUROPEAN PATENT SPECIFICATION

(11) **EP 2 805 901 B1**
(45) Date of publication and mention of the grant of the patent: **27.07.2016**
(21) Application number: 14168578.4
(22) Date of filing: 16.05.2014
(51) Int. Cl.: B65G 45/16

(54) **Scraper, holding device and scraper assembly**
Abstreifer, Haltevorrichtung und Abstreiferanordnung
Racleur, dispositif support et ensemble racleur

(30) Priority: 22.05.2013 SE 1350625
(43) Date of publication of application: 26.11.2014
(73) Proprietor: Vendig AB, 532 21 Skara (SE)
(72) Inventor: Fors, Lars-Erik, SE-459 94 Ljungskile (SE)
(74) Representative: Zacco Sweden AB

(56) References cited:
- EP-A1- 1 020 379
- US-A- 4 349 934
- US-A1- 2013 026 008

## Description

### TECHNICAL FIELD

The present invention relates to the field of scraper assemblies, comprising at least one scraper blade and a holding device, for cleaning of conveyor belts and, more particularly, to scraper assemblies where the at least one scraper blade easily can be replaced.

### BACKGROUND ART

Scraper assemblies used to keep conveyor belts clean and free of undesirable deposits, generally comprises at least one scraper blade arranged to abut a conveyor belt for mechanical scraping of the belt. In order to be as effective as possible, the scraper blade is generally arranged in the proximity of the conveyor wheel at the turn around point of the conveyor belt, just after the conveyor belt has discharged its load. The scraper blade may be arranged in contact with the conveyor belt or just over the surface of the conveyor belt.

If the scraper is arranged in contact with the conveyor belt the scraper blade will be exposed to extensive, continuous abrasion from the conveyor belt. Consequently, it is desirable that the scraper blade is arranged at a distance from the conveyor belt, but at the same time the closer the scraping blade is arranged to the conveyor belt, the better will the scraping characteristics of the scraper assembly be.

Further, in order to overcome this problem different materials or different configurations of the surface area of the scraper blade that abuts the conveyor belt may be used. However, this approach will not prevent wear of the scraper blades.

Generally the wear caused by the conveyor belt and the material transported thereon, on said a scraper is most significant at a central portions of the scraper abutting the middle of the conveyor belt. Consequently, if more than one scraper blade is used the wear of the centrally arranged scraper blades will be more significant than the wear of the outer arranged scraper blades.

Consequently, the scraper blades will be exposed to extensive wear resulting in that the scraper blades have limited lifetime. Replacing worn out scraper blades may be costly both due to the material cost and due to that the transport line, including the conveyor belt, needs to be stopped during the replacement of the scraper blades. It is desired that a scraper blade can be replaced in a quick and efficient manner. Document US 2013/026008 A1 discloses a scraper blade, a holding device and a scraper assembly according to the preamble of claims 1, 6 and 11 respectively. Document US 4 349 934 A discloses a knife block for drum dryers and flakers, the knife block is provided with a slot for attachments purposes.

### SUMMARY OF THE INVENTION

The object of the present invention is to provide an inventive product for improved mounting and dismounting of replaceable scraper blades of a scraper assembly where the previously mentioned problems are partly avoided. The invention comprises a scraper assembly as stated in claim 11, a scraper blade as stated in claim 1 and a holding device as stated in claim 6. By combining the inventive scraper blade with the inventive holding device the inventive scraper assembly will obtain beneficial properties overcoming some of the previous problems within the technical field. The inventive scarper assembly provides a robust and simple scraper assembly arrangement, where the scraper blades may be replaced one by one independently.

The inventive scraper blade is provided with a front and a back side. The front side is adapted to be directed towards said conveyor belt and said back side is arranged opposite said front side. Further, the scraper blade is provided with a top portion adapted to abut against the conveyor belt. The scraper blade is also provided with a base portion adapted to be mounted on a holding device and an intermediate portion connecting the top portion with the base portion.

The base portion of the inventive scraper blade is formed as a tongue, which tongue extends from the intermediate portion, such that a groove is formed, which groove extends along the front side of the base portion and adjacent to the intermediate portion, i.e. in the transition between the intermediate portion and the base portion. The groove is provided with an inner part, which is provided with a semi circular cross section. The base portion and especially the groove are adapted to interact with the holding device of the scraper assembly in order to achieve a quick exchange of scraper blades.

The inventive holding device is provided with an elongated shape and a U-shaped cross section, created by a first and a second wall part and a bottom extending there between. The holding device can be provided to hold one or several scraper blades, wherein in most common applications a plurality of scraper blades is preferred.

The first wall part of said inventive holding device is provided with a first head, which first head is provided with a cross section with an essentially circularly shaped outer circumference, such as a three quarter circular cross section. The first head is adapted to be fitted in the groove of the scraper blade. The first head is arranged at the top of the first wall part, wherein the top of said first wall is opposite to an end of the first wall part connecting to the bottom.

The first head is adapted to be fitted into said groove of said inventive scraper blade such that said first head forms a pivot shoulder for said scraper blade, whereby said scraper blade can be pivoted about said first head between at least a first and a second position. The circularity of the first head of the holding device and the circularity of the groove of the scraper blade are adapted such that they can form a pivot joint when the first head is fitted into the groove.

In the first position the scraper blade can be fitted onto or removed from the holding device in that the groove is fitted about or removed from the first head. In the first position a scraper blade arranged in the holding device can easily be removed from the holding device, and thereby be replaced by a new scraper blade. After mounting of a scraper blade on the holding device, the scraper blade is in the first position, whereby by pivot the scraper blade into the second position the scraper blade is fixed to the holding device and in its working position. In the second position the scraper blade is adapted to be arranged such that it abuts the conveyor belt for cleaning or like of the conveyor belt. In the second position the scraper blade is arranged in its working position, i.e. is fixed in the holding device and the only movement it can perform is the pivot motion in direction towards the first position. In the second the tongue protrudes under the first head and the second wall limits the space on the backside of the tongue such that the second head cannot be removed from the groove.

The inventive scraper assembly enables an exchange of scraper blades in a quick manner, because one scraper blade can be removed from a scraper assembly without removing other adjacent scraper blades. This is enabled because the scraper blade is able to pivot about the first head of the holding device.

It can be foreseen that said first head is arranged such relative said first wall, that said first head is directed into said U-shaped section and thereby extends into said U-shaped cross section. It is however preferred that an outer surface of said first wall has a smooth transition into said first head. A large portion of the tongue can thereby protrude in under the first head of the holding device and thereby fix the scraper blade to the holding device.

The backside of the tongue is provided with a transition surface, wherein the transition surface is connecting to the front side. The transition surface reaches from the transition of the intermediate portion to the front side of the tongue. Especially, the transition surface is rounded. The transition surface can be rounded such that it is one continuous surface or be divided into a plurality of surfaces. However, the shape of the transition surface must be such that the scraper blade can pivot freely between its first and second position without any interference with neither of the second wall and/or the bottom of the holding device.

It is preferred that the scraper blade must be pivoted approximately 90° when being pivoted from the first position to the second position.

According to another development of the holding device the first head is adapted to receive protrusions of fixing means. This is enabled by that the first head is provided with circularly shaped recesses on each short side of the elongated holding device, wherein the recesses are adapted to receive the protrusions of fixing means. The circularly shaped recesses are preferably provided in the middle of the first head. Using recesses provided at the first head of the holding device has the advantage that the scraper assembly can easily and simply be arranged at desired location, if desired location is provided with the fixing means, without any need of additional fastening means.

The recesses may be formed either by the first head being provided with a circular hole through the whole head or by a circular indentations in the short ends of the first head. Developments of the holding device with a circular, all trough passing hole has the advantage that they will be lighter and that less material is needed for manufacturing.

According to yet a development of the inventive scraper blade, the tongue is narrower than the intermediate portion, such that a first and a second support surface is created in the transition of the intermediate portion and the tongue at the front and the back side respectively. When the scraper blade is positioned in the second position the first support surface of the scraper blade will abut the first head of the holding device and the second support surface of the scraper blade will abut a second head of the holding device, giving the advantage of that the scraper blade will be steadily arranged in the holding device.

Further, the second wall part of the inventive holding device is provided with the previously mentioned second head. The second head is provided by a flange extending from the second wall part. According to a preferred development the flange is directed into the U-shaped cross section and thereby extending into the U-shaped cross section. Arranging the second head as according to the invention has the advantage that it can be abutted by the second support surface of the scraper blade, which contributes to improved stability when the scraper blade is positioned in the second position, and that the flange forms a protruding lip which may be used for locking purposes.

Normally, when the inventive scraper assembly is in use, the scraper blade will abut the conveyor with its top portion such, that a reaction force upon the scraper blade acts to pivot the scraper blade towards its second position. A further rotation of the scraper blade, beyond the second position is prevented in that the scraper blade is supported by the second head upon its second support surface.

According to yet another development of the inventive holding device the first head is provided at a distance from the bottom of the U-shaped cross section such that a stop surface is provided between the first head and the bottom. The stop surface is constituted by the first wall part. The scraper blade is provided with a corresponding third support surface provided at the end of the tongue, between the groove and the connection of the transition surface to the front side. The third support surface is thereby provided at the front side below the groove. The third support surface is adapted to abut against the stop surface of the holding device when the scraper blade is positioned in its second position, whereby the stop surface is adapted to take up the reaction force upon the scraper blade together with the flange upon the second wall part. Hence, the second and the third support surface are adapted to make contact with their respective stop surface essentially simultaneously.

It is preferred that the width of an opening of the groove at least corresponding to a diameter of the semi circular cross section of the inner part of the groove. This has the advantage of that the opening of the groove is not hindering for the first head to fit the dimensions of the inner part of the groove, wherein the scraper blade can be made in a stiffer material.

According to a development of the scraper blade and the scraper assembly the transition surface of the scraper blade is provided with at least one locking protrusion, wherein the locking protrusion is provided at the back side of the transition surface. Further, the locking protrusion is provided such upon the transition surface that in the second position it is positioned between the second head and the bottom of the holding device. Further, the transition surface is thereby provided such, that when the locking protrusion passes the second head when the scraper blade pivots between its first and second position the locking protrusion must be pressed past the second head. The locking protrusion interacts with the second head and thereby provides a snap fit of the scraper blade, preventing the scraper blade to freely move between its first and second position.

The locking protrusion can be provided as a continuous elongated shoulder extending essentially parallel with the extension of the scraper blade or as a plurality of protrusion arranged parallel with the extension of the scraper blade.

According to a preferred development of the inventive scraper assembly, and especially of the inventive scraper blade, the scraper blade is made out of one piece of material. Using scraper blades made out of one piece of material has the advantage of that easy, fast end cost efficient manufacturing methods may be used. However, the scraper blade can be made out of different materials offering different material properties in regards of e.g. hardness, abrasion resistance, durability etc., depending on what properties that is desired for the scraper blade. It is also possible to coat the exposed surface area of the scraper blade abutting the conveyor belt with a coating or to enhance the exposed surface area in another way, e.g. by arranging a wear resistant material on the abutting surface.

In a preferred development of the inventive scraper blade is the scraper blade made out of one piece of a polyurethane material. Polyurethane materials have the advantage of being hard, tough and rigid, if high amounts of cross linking are present. Also other polymeric materials, preferably with high amount of cross linking or other structural properties providing desired material properties, are however possible.

The at least one scraper blade is generally arranged in the holding device to clean the conveyor belt, wherein this at least one scraper blade needs to cover the complete width of the conveyor belt. Either may one scraper blade with substantially the same width as the conveyor belt be arranged in the holding device, or may a plurality of scraper blades, together having substantially the same width as the conveyor belt, be arranged in the holding device.

According to an advantageous development of the inventive scraper assembly, the holding device is adapted to receive a plurality of scraper blades. Using a plurality of scraper blades has the advantage of that just the most worn scraper blades may be replaced, which will lower the cost for replaced scraper blades. In the inventive scraper assembly a middle scraper blade can be exchanged without removing the adjacent scraper blades. This is due to the inventive pivot arrangement of the scraper blades upon the holding device.

### BRIEF DESCRIPTION OF THE DRAWINGS

The present invention will now be described in detail with reference to the figures, wherein:
Fig. 1 shows a schematic view of an example of an inventive scraper assembly arranged at a conveyor belt,
Fig. 2a shows a schematic side view of an example of an inventive scraper blade,
Fig. 2b shows a schematic perspective view of an example of an inventive scraper blade,
Fig. 3a shows a schematic side view of an example of an inventive, H-shaped holding device,
Fig. 3b shows a schematic perspective view of an example of an inventive holding device,
Fig. 4a shows a schematic view of an example of an inventive scraper blade arranged in an inventive holding device, wherein said scraper blade is positioned in a first position,
Fig. 4b shows a schematic view of an example of an inventive scraper blade arranged in an inventive holding device, wherein said scraper blade is positioned in a second position, and
Fig. 5 shows a schematic perspective view of an example of four inventive scraper blades arranged in an inventive holding device.

### DETAILED DESCRIPTION

In the following only one embodiment of the invention is shown and described, simply by way of illustration of one mode of carrying out the invention.

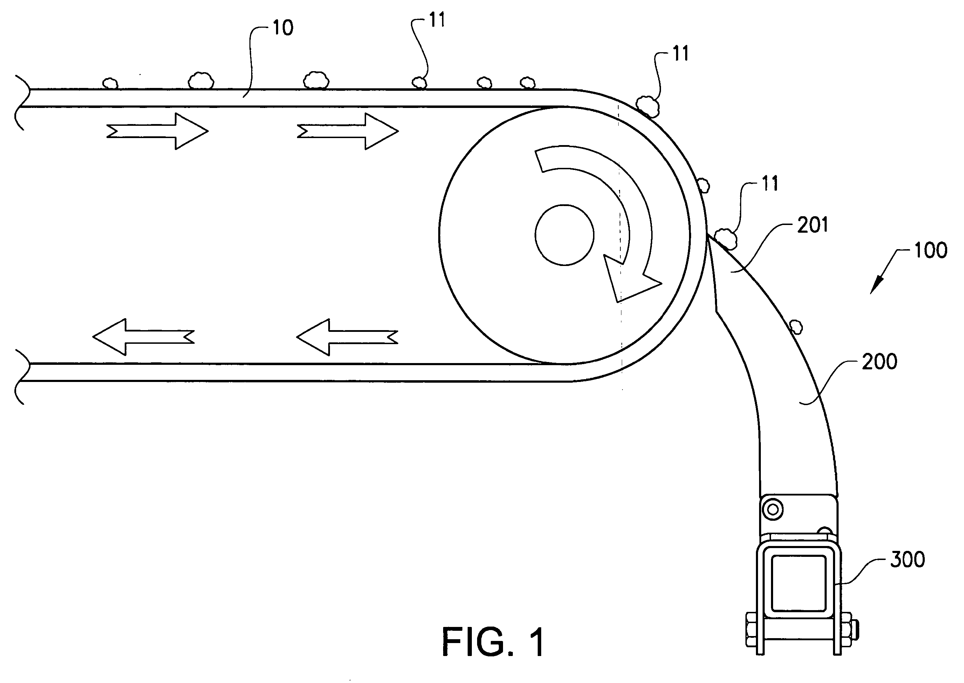

Figure 1 shows a schematic view of an example of an inventive scraper assembly 100 arranged at a conveyor belt 10, wherein the inventive scraper assembly 100 comprises a scraper blade 200 and a holding device 300 according to the invention. The scraper blade 200 is accordingly arranged in the holding device 300. Further, as is schematically shown in Fig. 1, the scraper blade is arranged to abut the conveyor belt 10 such that material 11 transported by the conveyor belt 10, is scraped off the conveyor belt 10.

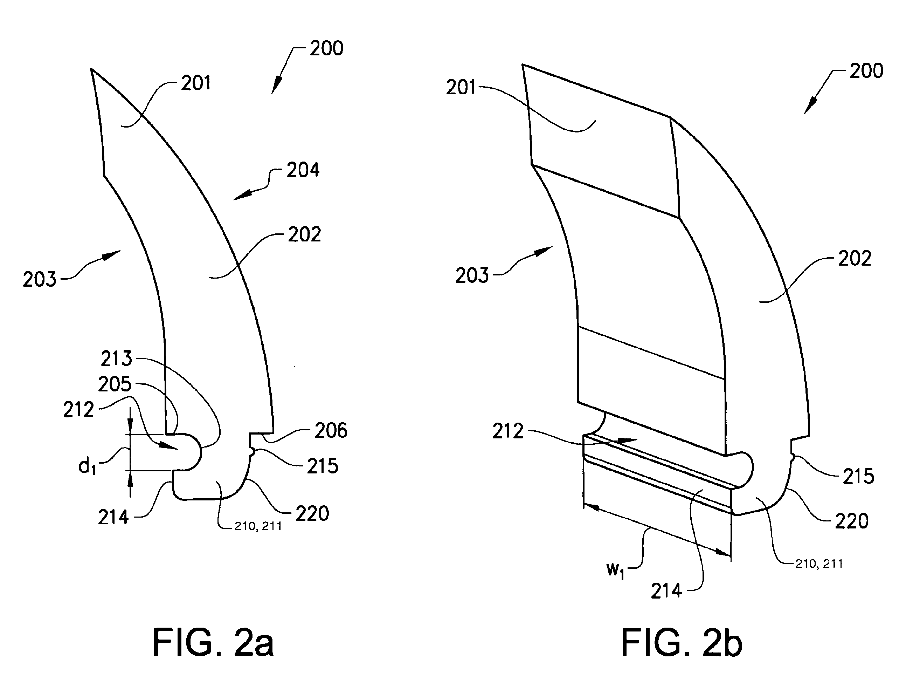

Figure 2a shows a schematic side view of an example of the inventive scraper blade 200. The scraper blade has a front side 203 and a back side 204. The scraper blade 200 comprises a top portion 201, a base portion 210 and an intermediate portion 202, wherein the intermediate portion 202 is connecting the top portion 201 with the base portion 210. The top portion 201 is configured to abut a conveyor belt for scraping of the conveyor belt. The base portion 210 of the scraper blade 200 is provided as a tongue 211 extending from the intermediate portion 202.

The tongue 211 is narrower than the intermediate portion 202 and is arranged substantially in the middle in between the front and the back side 203, 204 relative the intermediate portion 202. The tongue 211 is additionally bent in approximately 90° towards the front side 203, such that a groove 212 is provided at the front side 203 of the scraper blade 200. The inner part 213 of the groove 212 is provided with a semi circular cross section. The back side 204 of the base portion 210 is a transition surface 220 extending from the intermediate portion 202 to the front side 203 of the base portion 210. At the transition surface 220 a locking protrusion 215 is provided as an elongated shoulder 215.

Further, the scraper blade 200 is provided with a first, a second and a third support surface 205; 206; 214. The first support surface 205 is provided at the front side 203, and is formed in the transition of the intermediate portion 202 to the tongue 211, due to that the tongue 211 is narrower than the intermediate portion 202. The second support surface is provided at the back side 204, and is formed in the transition of the intermediate portion 202 to the tongue 211, due to that the tongue 211 is narrower than the intermediate portion 202 and located centered relative the intermediate portion 202. The third support surface 214 is provided at the end of the tongue 211 in between the groove 212 and where the transition surface 220 connects to the front side 203.

Figure 2b shows a schematic perspective view of the embodiment of the inventive scraper blade 200, showing that the scraper blade 200 has an elongated shape with a width w1. Fig. 2b additionally shows how the groove 212, formed between the tongue 211 and the intermediate portion 202, extends along the front side 203 of the scraper blade 200, wherein the groove 212 has the same width w1 as the scraper blade 200 and extends adjacent to the intermediate portion 202. According to the embodiment of the inventive scraper blade 200 shown in Fig. 2b the short sides of the scraper blade 200 are substantially flat, enabling that a plurality of scraper blades may be arranged side by side. The scraper blade 200 is also provided with the locking protrusion 215.

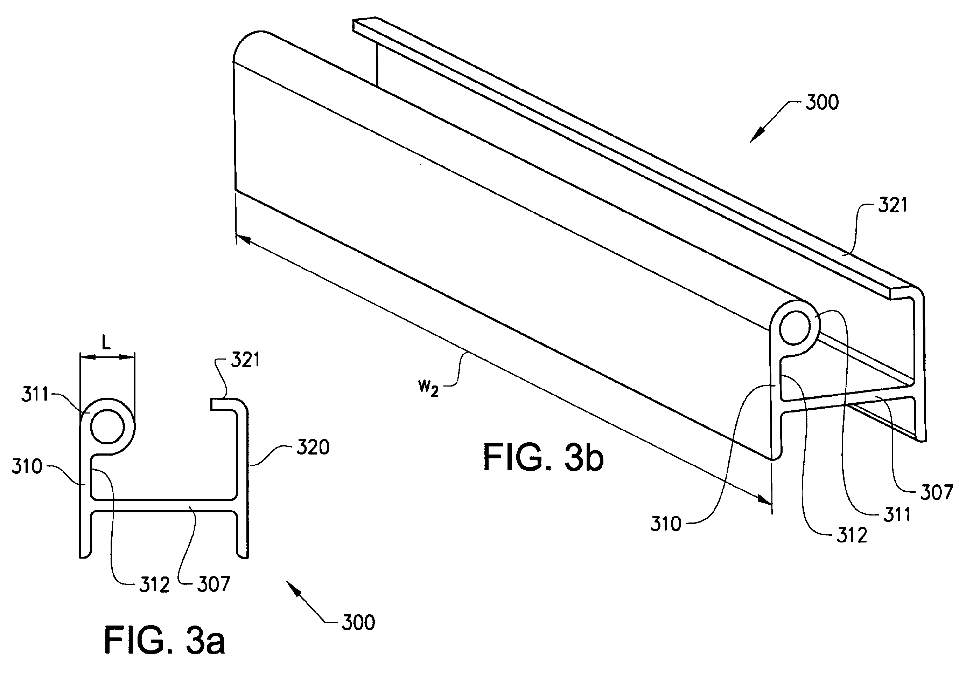

Figure 3a shows a schematic side view of an embodiment of the inventive holding device 300 with an H-shaped cross section. The upper part of the holding device 300 consequently has a U-shaped cross section. The U-shaped portion of the holding device 300 is formed by a first wall part, a second wall part and a bottom 310; 320; 307, wherein the first wall part 310 and the second wall part 320 are substantially parallel. The bottom 307 extending between the first wall part 310 and the second wall part 320 and is substantially perpendicular to the first and second wall part 310; 320. The first wall part 310 is provided with a first head 311, which is arranged at the top of the U-shape. The first head 311 is provided with a cross section with an essentially circularly shaped outer circumference. Further, the first head 311 is provided at the top of the first wall part 310 such that the first head 311 protrudes into the U-shaped cross section of the holding device 300. The distance the first head 311 protrude inside the U-shaped cross section is about equal with the diameter of the circular cross section of the first head 311.

The second wall part 320 is provided with a second head 321, which is arranged at the top of the U-shape. The second head 321 is formed as a flange extending into the U-shape. An upper surface of the first head 311 is substantially on the same level as an upper surface of the second head 321. Further a stop surface 312 is provided at the first wall part 310 below the first head 311 and the bottom 307. The stop surface is formed by partition of the first wall part 310 extending between the bottom 307 and the first head 311. The first head 311 is provided with a circularly shaped recess 313, which preferably extends along the whole length of the first head 311.

Figure 3b shows a schematic perspective view of the holding device 300. As can be seen in Fig. 3b has the holding device 300 an elongated shape with a length w2. It can further be seen that the first wall part, the second wall part, the bottom, the first head and the second head 310; 320; 307; 311; 321 extends along the whole holding device 300 and thereby have the same length w2 as the holding device 300.

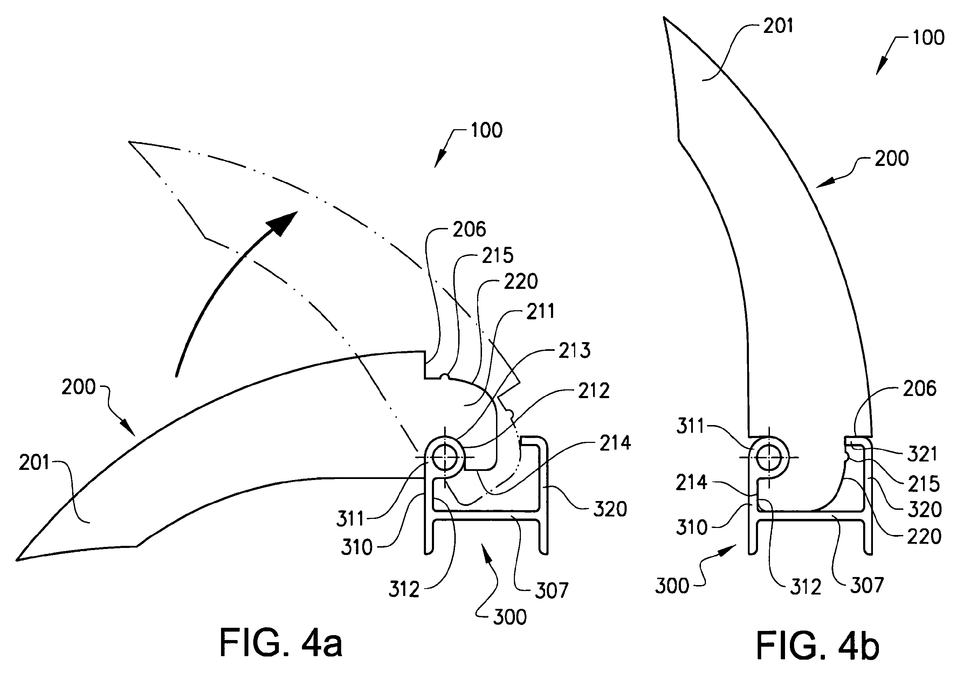

It should also be pointed out that said first head 310 of said holding device 300, provided with a cross section with an essentially circularly shaped outer circumference, may be provided as a ring with a minor ring segment missing such that an open ring is formed. This may be an advantageous design when manufacturing said elongated holding device 300, especially during a casting process. Figure 4a and b shows a schematic view of an embodiment of an inventive scraper assembly 100 comprising the scraper blade 200 and the holding device 300. The scraper blade 200 is adapted to be fitted onto the holding device 300 in that the groove 212 of the scraper blade 200 receives the first head 213 of the holding device 300.

The scraper blade 200 can thereby pivot about the first head 213 between a first and a second position, wherein the scraper blade 200 is shown in its first position in figure 4a and in its second position in figure 4b.

In the first position the scraper blade 200 can easily be mounted and dismounted from the holding device 300, in order to exchange a worn out scraper blade 200.

In the second position the scraper blade is pivoted approximately 90° from its first position. In the second position the first support surface 205 abutting and resting on the top surface of the first head 311 and the second support surface 206 abutting and resting on the top surface of the second head 321 and the third support surface 214 is abutting the stop surface 312. The scraper assembly 100 is mounted at a conveyor belt (as shown in figure 1) such that the top portion 201 of the scraper blade 200 is pressed against the conveyor belt, whereby the second and third support surfaces 206; 214 is pressed against the top surface of the flange 321 and the stop surface 312.

Additionally, the transition surface 220 is configured such that the pivot motion of the scraper blade 200 can be performed without the transition surface 220 interfere with either of the second wall 320 nor the bottom 307 of the holding device 300.

Additionally, the locking protrusion 215 is provided such upon the transition surface 220, that it is located below the second head 321 when the scraper blade 200 is positioned in its second position. Further, the transition surface 220 with the locking protrusion 214 and the second head 206 is provided such relative each other that the locking protrusion 215 provides a snap lock for the scraper blade 200 when the scraper blade is pivoted such that the locking protrusion passes the second head 206 in a pivot motion from the first to the second position.

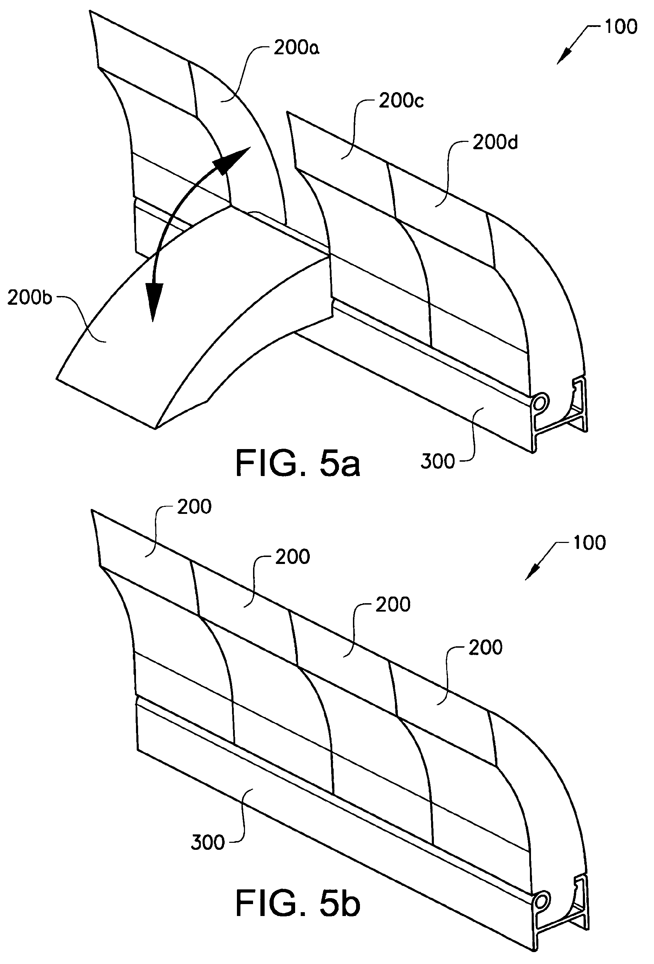

Figure 5 shows a schematic perspective view of an inventive scraper assembly 100 provided with four scraper blades 200a, 200b, 200c, 200d arranged side by side in an elongated holding device 300. One of the middle scraper blades 200b is arranged in its first position. As can be seen from its first position the scraper blade 200b can be removed from the inventive scraper assembly 100, whereby the other scraper blades 200a, 200c, 200d not have to be moved or tampered with in order to exchange of the scraper blade 200b.

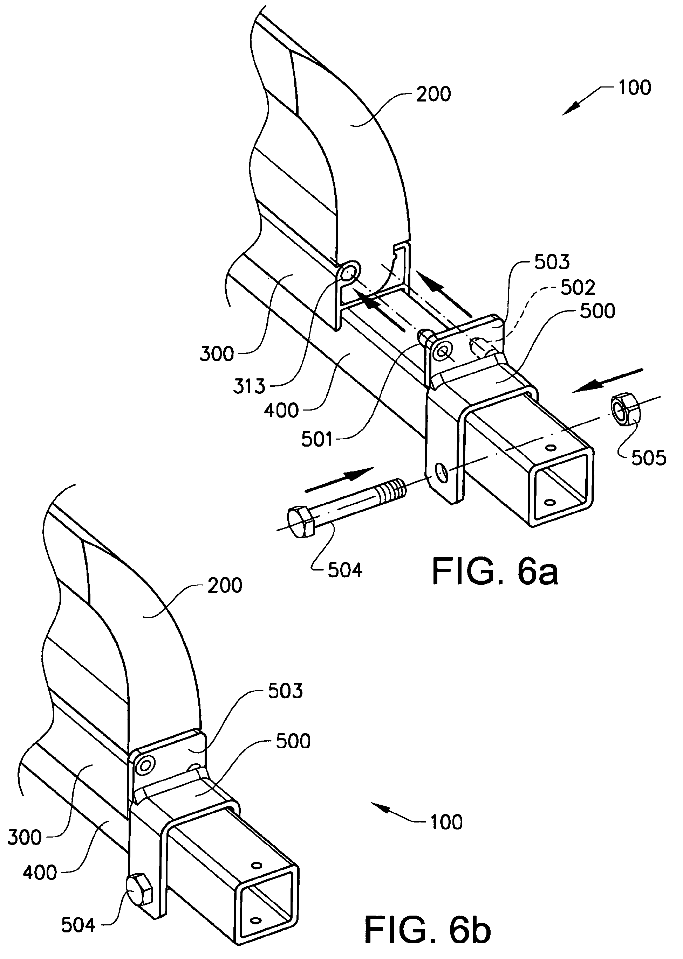

Figure 6a and b discloses a short end of the inventive scraper assembly 100. By providing the holding device 300 with an H-shaped cross section, it can be fitted on to a beam 400 in a convenient manner. Further, a locking device 500 is provided in order to lock the scraper assembly 100 to the beam 400. The locking device 500 has a lower U-shaped cross section, such that it is adapted to be fitted upon a beam 400 and is provided with a first and a second attachment pin 501, 502 upon a flange 503. The first attachment pin 501 is adapted to fit into the circular shaped recesses 313 in the first head of the holding device 300. The second attachment pin 502 is adapted to be fitted in between the transition surface 220 of the scraper blade 200 and the second wall part 320 of the holding device 300. The first and the second attachment pin 501, 502 is positioned into the holding device 300 by sliding the locking device 500 into its locking position (figure 6b). The locking device 500 is fixed to the beam with a bolt 504 and a nut 505, wherein the bolt can be arranged through the beam 400 or below the beam 400.

## Claims

1. A scraper blade (200) for cleaning of a conveyor belt (10), said scraper blade (200) is provided with
• a front and a back side (203, 204), whereby said front side (203) is adapted to be directed towards said conveyor belt (10) and said back side (204) is arranged opposite said front side (203),
• a top portion (201) adapted to abut against said conveyor belt (10),
• a base portion (210) adapted to be mounted on a holding device (300), and
• an intermediate portion (202) connecting said top portion (201) with said base portion (210),
said base portion (210) is formed as a tongue (211), which tongue (211) extends from said intermediate portion (202), such that a groove (212) is formed,
the groove (212) extends along said front side (203) of said base portion (210) and adjacent said intermediate portion (202), wherein said groove (212) is provided with an inner part (213) with a semi-circular cross section, **characterised in, that** the backside (204) of said tongue (211) is provided with a transition surface (220), and said transition surface (220) is rounded, and **in that** the transition surface (220) is connecting to the front side (203).

2. A scraper blade (200) according to claim 1, wherein said tongue (211) is narrower than said intermediate portion (202) such that a first and a second support surface (205, 206) is created in the transition of said intermediate portion (202) and said tongue (211) at the front and the back side (203, 204) respectively.

3. A scraper blade (200) according to claim 1 or 2, wherein a third support surface (214) is provided at the end of said tongue (211) at said front side (203) below said groove (212).

4. A scraper blade (200) according to any of the preceding claim, wherein a width of an opening of said groove (212) at least corresponds to a diameter (d) of said semi-circular cross section.

5. A scraper blade (200) according to any of the preceding claims, wherein said transition surface (220) is provided with a locking protrusion (215) provided at said back side (204).

6. A holding device (300) for receiving a base portion (210) of a scraper blade (200), wherein said holding device (300) is provided with an elongate shape and an U-shaped cross section created by a first and a second wall part (310, 320) and a bottom (307) whereby said first wall part (310) is provided with a first head (311), **characterised in that** first head (311) is provided with a cross section with a circularly shaped outer circumference.

7. A holding device (300) according to claim 6, wherein said second wall part (320) is provided with a second head (321), which second head (321) is provided by a flange extending from said second wall part (320).

8. A holding device (300) according to claim 7, wherein said flange is directed into said U-shaped cross section.

9. A holding device (300) according to any of the preceding claims 6-8, wherein said first head (311) is provided such that it extends into said U-shaped cross section.

10. A holding device (300) according to any of the preceding claims 6-9, wherein said first head (311) is provided at a distance from said bottom (307) of said U-shaped cross section such, that a stop surface (312) is provided between said first head (311) and said bottom (301).

11. A scraper assembly (100) for cleaning of a conveyor belt (10), wherein said scraper assembly (100) comprising a scraper blade (200) and a holding device (300), wherein said scraper assembly (100) is provided with;
• a front and a back side (203, 204), whereby said front side (203) is adapted to be directed towards said conveyor belt (10) and said back side (204) is arranged opposite said front side (203), and
said scraper blade (200) is provided with;
• a top portion (201) adapted to be mounted against said conveyor belt (10),
• a base portion (210) adapted to be mounted on a holding device (300),
• an intermediate portion (202) connecting said top portion (201) with said base portion (210), and
said holding device (300) is provided with;
• an elongated shape and an U-shaped cross section, created by a first and a second wall part (310, 320) and a bottom (307),
whereby
said base portion (210) is formed as a tongue (211), which extends from said intermediate portion (202), such that a groove (212) is formed, which groove extends along said front side (203) of said base portion (210) and adjacent said intermediate portion (202),
, and a transition surface (220) is provided at said tongue (211) back side (204), wherein said groove (212) is provided with an inner part (213), which is provided with a semi circular cross section, and said transition surface (220) is connecting to said front side (203), **characterised in, that** said first wall part (310) is provided with a first head (311), which first head (311) is provided with a cross section with a circularly shaped outer circumference, wherein
said first head (311) can be fitted into said groove (212) such that said first head (311) forms a pivot shoulder for said scraper blade (200), whereby said scraper blade (200) can be pivoted about said first head (311) between at least a first and a second position, wherein in said first position said first head (311) can be fitted into said groove (212), and in said second position transition surface (220) connects to said front side (203) in between said first head (311) and said bottom (307).

12. A scraper assembly (100) according to claim 11, wherein said tongue (211) is narrower than said intermediate portion (202) such that a first and a second support surface (205, 206) is created in the transition of said intermediate portion (202) and said tongue (211) at the front and the back side (203, 204) respectively, and said second wall part (320) is provided with a second head (321), which second head (321) is provided by a flange extending from said second wall part (320), whereby in said first position;
• said first support surface (205) is adapted to rest upon said first head (311), and
• said second support surface (206) is adapted to rest upon said second head (321).

13. A scraper assembly (100) according to claim 11 or 12, wherein a third support surface (214) is provided between said groove (212) and said connection to said front side (203) of said transition surface (220), and said third support surface (214) is adapted to rest upon a stop surface (312) provided by the first wall (310) in between said bottom (301) and said first head (311).

14. A scraper assembly (100) according to any of the claims 11 to 13, wherein said transition surface (220) is provided with a locking protrusion (215) provided along said back side (204) and said locking protrusion (215) is provided such upon said transition surface (220) that in said second position it is positioned between said second head (321) and said bottom (301) of said holding device (300).

## Patentansprüche

1. Abstreiferklinge (200) zum Reinigen eines Förderbands (10), wobei die Abstreiferklinge (200) mit Folgendem bereitgestellt ist:
• einer Vorder- und einer Rückseite (203, 204), wobei die Vorderseite (203) so konzipiert ist, dass sie zum Förderband (10) hin ausgerichtet ist, und die Rückseite (204) gegenüber der Vorderseite (203) angeordnet ist,
• einem oberen Abschnitt (201), der so konzipiert ist, dass er an dem Förderband (10) anliegt,
• einem Basisabschnitt (210), der so konzipiert ist, dass er auf einer Haltevorrichtung (300) montiert ist, und
• einem Zwischenabschnitt (202), der den oberen Abschnitt (201) mit dem Basisabschnitt (210) verbindet,
wobei der Basisabschnitt (210) als Zunge (211) geformt ist, wobei sich die Zunge (211) so vom Zwischenabschnitt (202) erstreckt, dass eine Nut (212) geformt wird,
wobei sich die Nut (212) entlang der Vorderseite (203) des Basisabschnitts (210) und neben dem Zwischenabschnitt (202) erstreckt, wobei die Nut (212) mit einem inneren Teil (213) mit einem halbkreisförmigen Querschnitt bereitgestellt ist, **dadurch gekennzeichnet, dass** die Rückseite (204) der Zunge (211) mit einer Übergangsfläche (220) bereitgestellt und die Übergangsfläche (220) gerundet ist, und dadurch, dass die Übergangsfläche (220) mit der Vorderseite (203) verbunden ist.

2. Abstreiferklinge (200) nach Anspruch 1, wobei die Zunge (211) schmaler als der Zwischenabschnitt (202) ist, sodass eine erste und eine zweite Stützfläche (205, 206) im Übergang des Zwischenabschnitts (202) und der Zunge (211) an der Vorder- bzw. der Rückseite (203, 204) erstellt wird.

3. Abstreiferklinge (200) nach Anspruch 1 oder 2, wobei eine dritte Stützfläche (214) am Ende der Zunge (211) an der Vorderseite (203) unter der Nut (212) bereitgestellt ist.

4. Abstreiferklinge (200) nach einem der vorstehenden Ansprüche, wobei eine Breite einer Öffnung der Nut (212) einem Durchmesser (d) des halbkreisförmigen Querschnitts zumindest entspricht.

5. Abstreiferklinge (200) nach einem der vorstehenden Ansprüche, wobei die Übergangsfläche (220) mit einem Verriegelungsvorsprung (215) auf der Rückseite (204) bereitgestellt ist.

6. Haltevorrichtung (300) zum Aufnehmen eines Basisabschnitts (210) einer Abstreiferklinge (200), wobei die Haltevorrichtung (300) mit einer länglichen Form und einem U-förmigen Querschnitt bereitgestellt ist, erstellt durch einen ersten und einen zweiten Wandteil (310, 320) und einem Boden (307), wobei der erste Wandteil (310) mit einem ersten Kopf (311) bereitgestellt ist, **dadurch gekennzeichnet, dass** der erste Kopf (311) mit einem Querschnitt mit einem kreisförmig geformten äußeren Umfang bereitgestellt ist.

7. Haltevorrichtung (300) nach Anspruch 6, wobei der zweite Wandteil (320) mit einem zweiten Kopf (321) bereitgestellt ist, wobei der zweite Kopf (321) durch einen Flansch bereitgestellt ist, der sich vom zweiten Wandteil (320) erstreckt.

8. Haltevorrichtung (300) nach Anspruch 7, wobei der Flansch in den U-förmigen Querschnitt gerichtet ist.

9. Haltevorrichtung (300) nach einem der vorstehenden Ansprüche 6 bis 8, wobei der erste Kopf (311) so bereitgestellt ist, dass er sich in den U-förmigen Querschnitt erstreckt.

10. Haltevorrichtung (300) nach einem der vorstehenden Ansprüche 6 bis 9, wobei der erste Kopf (311) so in einem Abstand vom Boden (307) des U-förmigen Querschnitts bereitgestellt ist, dass eine Anschlagfläche (312) zwischen dem ersten Kopf (311) und dem Boden (301) bereitgestellt ist.

11. Abstreiferanordnung (100) zum Reinigen eines Förderbands (10), wobei die Abstreiferanordnung (100) eine Abstreiferklinge (200) und eine Haltevorrichtung (300) umfasst, wobei die Abstreiferanordnung (100) mit Folgendem bereitgestellt ist:
• einer Vorder- und einer Rückseite (203, 204), wobei die Vorderseite (203) so konzipiert ist, dass sie zum Förderband (10) hin ausgerichtet ist, und die Rückseite (204) gegenüber der Vorderseite (203) angeordnet ist, und
die Abstreiferklinge (200) mit Folgendem bereitgestellt ist:
• einem oberen Abschnitt (201), der so konzipiert ist, dass er gegen das Förderband (10) montiert ist,
• einem Basisabschnitt (210), der so konzipiert ist, dass er auf einer Haltevorrichtung (300) montiert ist,
• einem Zwischenabschnitt (202), der den oberen Abschnitt (201) mit dem Basisabschnitt (210) verbindet, und
die Haltevorrichtung (300) mit Folgendem bereitgestellt ist:
• einer länglichen Form und einem U-förmigen Querschnitt, erstellt durch einen ersten und einen zweiten Wandteil (310, 320) und einen Boden (307),
wobei
der Basisabschnitt (210) als eine Zunge (211) geformt ist, die sich vom Zwischenabschnitt (202) so erstreckt, dass eine Nut (212) geformt wird, wobei die Nut sich entlang der Vorderseite (203) des Basisabschnitts (210) und neben dem Zwischenabschnitt (202) erstreckt,
und eine Übergangsfläche (220) an der Rückseite (204) der Zunge (211) bereitgestellt ist, wobei die Nut (212) mit einem inneren Teil (213) bereitgestellt ist, der mit einem halbkreisförmigen Querschnitt bereitgestellt ist, und die Übergangsfläche (220) mit der Vorderseite (203) verbunden ist, und **dadurch gekennzeichnet, dass**
der erste Wandteil (310) mit einem ersten Kopf (311) bereitgestellt ist, wobei der erste Kopf (311) mit einem Querschnitt mit einem kreisförmig geformten äußeren Umfang bereitgestellt ist, wobei
der erste Kopf (311) so in die Nut (212) eingepasst werden kann, dass der erste Kopf (311) eine Schwenkschulter für die Abstreiferklinge (200) formt, wobei die Abstreiferklinge (200) um den ersten Kopf (311) zwischen mindestens einer ersten und einer zweiten Position geschwenkt werden kann, wobei in der ersten Position der erste Kopf (311) in die Nut (212) eingepasst werden kann und in der zweiten Position die Übergangsfläche (220) mit der Vorderseite (203) zwischen dem ersten Kopf (311) und dem Boden (307) verbunden ist.

12. Abstreiferanordnung (100) nach Anspruch 11, wobei die Zunge (211) schmaler ist als der Zwischenabschnitt (202), sodass eine erste und eine zweite Stützfläche (205, 206) im Übergang des Zwischenabschnitts (202) und der Zunge (211) an der Vorder- bzw. der Rückseite (203, 204) erstellt wird, und der zweite Wandteil (320) mit einem zweiten Kopf (321) bereitgestellt ist, wobei der zweite Kopf (321) durch einen Flansch bereitgestellt ist, der sich vom zweiten Wandteil (320) erstreckt, wobei in der ersten Position:
• die erste Stützfläche (205) konzipiert ist, um auf dem ersten Kopf (311) zu ruhen, und
• die zweite Stützfläche (206) konzipiert ist, um auf dem zweiten Kopf (321) zu ruhen.

13. Abstreiferanordnung (100) nach Anspruch 11 oder 12, wobei eine dritte Stützfläche (214) zwischen der Nut (212) und der Verbindung zur Vorderseite (203) der Übergangsfläche (220) bereitgestellt ist und die dritte Stützfläche (214) konzipiert ist, um auf einer Anschlagfläche (312) zu ruhen, die von der ersten Wand (310) zwischen dem Boden (301) und dem ersten Kopf (311) bereitgestellt ist.

14. Abstreiferanordnung (100) nach einem der Ansprüche 11 bis 13, wobei die Übergangsfläche (220) mit einem Verriegelungsvorsprung (215) bereitgestellt ist, der entlang der Rückseite (204) bereitgestellt ist, und der Verriegelungsvorsprung (215) auf der Übergangsfläche (220) so bereitgestellt ist, dass er in der zweiten Position zwischen dem zweiten Kopf (321) und dem Boden (301) der Haltevorrichtung (300) positioniert ist.

## Revendications

1. Lame de racleur (200) pour le nettoyage d'une courroie de transporteur (10), ladite lame de racleur (200) comprend
• un côté avant et un côté arrière (203, 204), moyennant quoi ledit côté avant (203) est apte à être dirigé vers ladite courroie de transporteur (10) et ledit côté arrière (204) est agencé à l'opposé dudit côté avant (203),
• une portion supérieure (201) apte à venir en butée contre ladite courroie de transporteur (10),
• une portion de base (210) apte à être montée sur un dispositif support (300) et
• une portion intermédiaire (202) reliant ladite portion supérieure (201) à ladite portion de base (210),
ladite portion de base (210) est formée comme une languette (211), laquelle languette (211) s'étend depuis ladite portion intermédiaire (202), de telle sorte qu'une rainure (212) est formée,
la rainure (212) s'étend le long dudit côté avant (203) de ladite portion de base (210) et adjacente à ladite portion (202) intermédiaire, dans laquelle ladite rainure (212) est dotée d'une partie interne (213) avec une section transversale semi-circulaire, **caractérisée en ce que** le côté arrière (204) de ladite languette (211) est doté d'une surface de transition (220) et ladite surface de transition (220) est arrondie et **en ce que** la surface de transition (220) est reliée au côté avant (203).

2. Lame de racleur (200) selon la revendication 1, dans laquelle ladite languette (211) est plus étroite que ladite portion intermédiaire (202), de telle sorte qu'une première et une deuxième surface de support (205, 206) sont créées dans la transition de ladite portion intermédiaire (202) et sur ladite languette (211) au niveau du côté avant et du côté arrière (203, 204) respectivement.

3. Lame de racleur (200) selon la revendication 1 ou 2, dans laquelle une troisième surface de support (214) est prévue au niveau de l'extrémité de ladite languette (211) au niveau dudit côté avant (203) sous ladite languette (212).

4. Lame de racleur (200) selon l'une quelconque des revendications précédentes, dans laquelle une largeur d'une ouverture de ladite rainure (212) correspond au moins à un diamètre (d) de ladite section transversale semi-circulaire.

5. Lame de racleur (200) selon l'une quelconque des revendications précédentes, dans laquelle ladite surface de transition (220) est dotée d'une saillie de verrouillage (215) prévue au niveau dudit côté arrière (204).

6. Dispositif support (300) destiné à recevoir une portion de base (210) d'une lame de racleur (200), où ledit dispositif support (300) est doté d'une forme allongée et d'une section transversale en forme de U, créées par des première et seconde parties de paroi (310, 320) et un fond (307), moyennant quoi ladite première partie de paroi (310) est dotée d'une première tête (311), **caractérisé en ce que** la première tête (311) est dotée d'une section transversale avec une circonférence externe de forme circulaire.

7. Dispositif support (300) selon la revendication 6, dans lequel ladite seconde partie de paroi (320) est dotée d'une seconde tête (321), ladite seconde tête (321) étant formée par une bride s'étendant depuis ladite seconde partie de paroi (320).

8. Dispositif support (300) selon la revendication 7, dans lequel ladite bride est dirigée dans ladite section transversale en forme de U.

9. Dispositif support (300) selon l'une quelconque des revendications précédentes 6 à 8, dans lequel ladite première tête (311) est prévue de telle sorte qu'elle s'étende dans ladite section transversale en forme de U.

10. Dispositif support (300) selon l'une quelconque des revendications précédentes 6 à 9, dans lequel ladite première tête (311) est prévue à une distance dudit fond (307) de ladite section transversale en forme de U, de telle sorte qu'une surface d'arrêt (312) est fournie entre ladite première tête (311) et ledit fond (301).

11. Ensemble racleur (100) pour le nettoyage d'une courroie de transporteur (10), dans lequel ledit ensemble racleur (100) comprenant une lame de racleur (200) et un dispositif support (300), dans lequel ledit ensemble racleur (100) comprend ;
• un côté avant et un côté arrière (203, 204), moyennant quoi ledit côté avant (203) est apte à être dirigé vers ladite courroie de transporteur (10) et ledit côté arrière (204) est agencé à l'opposé dudit côté avant (203), et
ladite lame de racleur (200) comporte ;
• une portion supérieure (201) apte à être montée contre ladite courroie de transporteur (10),
• une portion de base (210) apte à être montée sur un dispositif support (300),
• une portion intermédiaire (202) reliant ladite portion supérieure (201) à ladite portion de base (210) et
ledit dispositif support (300) comporte ;
• une forme allongée et une section transversale en forme de U, créées par des première et seconde parties de paroi (310, 320) et un fond (307),
moyennant quoi
ladite portion de base (210) est formée comme une languette (211), qui s'étend depuis ladite portion intermédiaire (202), de telle sorte qu'une rainure (212) est formée, laquelle rainure s'étend le long dudit côté avant (203) de ladite portion de base (210) et adjacente à ladite portion intermédiaire (202),
et une surface de transition (220) est prévue au niveau dudit côté arrière (204) de ladite languette (211), dans lequel ladite rainure (212) est dotée d'une partie interne (213), qui est dotée d'une section transversale semi-circulaire et ladite surface de transition (220) est reliée audit côté avant (203) et **caractérisé en ce que**
ladite première partie de paroi (310) est dotée d'une première tête (311), laquelle première tête (311) est dotée d'une section transversale avec une circonférence externe de forme circulaire, dans lequel
ladite première tête (311) peut être ajustée dans ladite rainure (212), de telle sorte que ladite première tête (311) forme un épaulement de pivot pour ladite lame de racleur (200), moyennant quoi ladite lame de racleur (200) peut être amenée à pivoter autour de ladite première tête (311) entre au moins une première et une seconde position, dans lequel, dans ladite première position, ladite première tête (311) peut être ajustée dans ladite rainure (212) et, dans ladite seconde position, la surface de transition (220) est reliée audit côté avant (203) entre ladite première tête (311) et ledit fond (307).

12. Ensemble racleur (100) selon la revendication 11, dans lequel ladite languette (211) est plus étroite que ladite portion intermédiaire (202), de sorte que des première et deuxième surfaces de support (205, 206) sont créées dans la transition de ladite portion intermédiaire (202) et de ladite languette (211) au niveau du côté avant et du côté arrière (203, 204), respectivement, et ladite seconde partie de paroi (320) est dotée d'une seconde tête (321), laquelle seconde tête (321) est dotée d'une bride s'étendant depuis ladite seconde partie de paroi (320), moyennant quoi, dans ladite première position ;
• ladite première surface de support (205) est apte à reposer sur ladite première tête (311) et
• ladite deuxième surface de support (206) est apte à reposer sur ladite seconde tête (321).

13. Ensemble racleur (100) selon la revendication 11 ou 12, dans lequel une troisième surface de support (214) est prévue entre ladite rainure (212) et ladite liaison avec ledit côté avant (203) de ladite surface de transition (220) et ladite troisième surface de support (214) est apte à reposer sur une surface d'arrêt (312) formée par la première paroi (310) entre ledit fond (301) et ladite première tête (311).

14. Ensemble racleur (100) selon l'une quelconque des revendications 11 à13, dans lequel ladite surface de transition (220) est dotée d'une saillie de verrouillage (215) prévue le long dudit côté arrière (204) et ladite saillie de verrouillage (215) est prévue de sorte que, lorsque ladite surface de transition (220) est dans ladite seconde position, elle est positionnée entre ladite seconde tête (321) et ledit fond (301) dudit dispositif support (300).
